(19)

**Europäisches Patentamt**
**European Patent Office**
**Office européen des brevets**

(11) **EP 4 606 635 A1**

(12) **EUROPÄISCHE PATENTANMELDUNG**

(43) Veröffentlichungstag:
27.08.2025 Patentblatt 2025/35

(21) Anmeldenummer: 25151452.7

(22) Anmeldetag: **13.01.2025**

(51) Internationale Patentklassifikation (IPC):
**B60L 53/30** (2019.01)   **B60L 53/60** (2019.01)
**B60L 53/63** (2019.01)   **B60L 53/65** (2019.01)
**B60L 53/66** (2019.01)   **B60L 3/12** (2006.01)

(52) Gemeinsame Patentklassifikation (CPC):
**B60L 53/60; B60L 3/12; B60L 53/305; B60L 53/63;**
**B60L 53/65; B60L 53/66;** B60L 2240/70;
B60L 2240/72; B60L 2250/16; B60L 2260/50

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: **22.02.2024 DE 102024201601**

(71) Anmelder: **Robert Bosch GmbH**
**70442 Stuttgart (DE)**

(72) Erfinder: **Boronka, Alexander**
**74369 Loechgau (DE)**

(54) **VERFAHREN ZUM ERMITTELN EINER REALEN ERWARTBAREN LADELEISTUNG EINER LADESTATION**

(57)    Verfahren und Vorrichtung zum Ermitteln einer tatsächlich erwartbaren Ladeleistung (Preal) einer Ladestation (LS) mit den Schritten: Erhalten (S1) eines Ladedatensatzes (LDS) von der Ladestation (LS), der eine von der Ladestation (LS) in einem Ladevorgang (LV) innerhalb einer Ladezeit (LZ) an ein Elektrofahrzeug (EF) abgegebene elektrische Ladeenergie (LE) angibt; Berechnen (S2) einer durchschnittlichen Ladeleistung (PLV) des Ladevorganges (LV) in Abhängigkeit von der in dem erhaltenen Ladedatensatz (LDS) angegebenen Ladeenergie (LE) und der in dem erhaltenen Ladedatensatz (LDS) angegebenen Ladezeit (LZ), Vergleichen (S3) der berechneten durchschnittlichen Ladeleistung (PLV) des Ladevorganges (LV) mit einer gespeicherten maximalen Ladeleistung (PLV MAX) der Ladestation (LS), Überschreiben (S4) der bisher gespeicherten maximalen Ladeleistung (PLV MAX) der Ladestation (LS) durch die berechnete durchschnittliche Ladeleistung (PLV), falls die berechnete durchschnittliche Ladeleistung (PLV) größer ist als die bisher gespeicherte maximale Ladeleistung (PLV MAX), wobei bei jeder vorgenommenen Überschreibung ein Zählwert eines zugehörigen Überschreibungszählers inkriminiert (S5) wird; und Ermitteln (S7) der zuletzt überschriebenen maximalen Ladeleistung (PLV MAX) als die tatsächlich erwartbare Ladeleistung (Preal) der Ladestation (LS) sobald der inkriminierten Zählwerts des Überschreibungszählers einen vordefinierten Schwellenwert (SW) erreicht (S6).

**Fig. 1**

EP 4 606 635 A1

**Beschreibung**

Die Erfindung schafft ein Verfahren und eine Vorrichtung zum Ermitteln einer tatsächlich erwartbaren Ladeleistung einer Ladestation, die zum Aufladen eines Elektrofahrzeugs verwendet wird.

Stand der Technik

Eine Ladestation für Elektrofahrzeuge lädt das Fahrzeug, indem sie elektrische Energie von einer Stromquelle oder von einem Stromversorgungsnetz zu dem Fahrzeug überträgt. Das Elektrofahrzeug wird mit der Ladestation über ein Ladekabel und einen passenden Stecker verbunden. Es gibt unterschiedliche Steckertypen, je nach Standort und Fahrzeugtyp.

Die DE 10 2016 202 002 A1 betrifft eine Energiemanagementeinrichtung zur Steuerung eines Ladesteuergeräts in einem Elektrofahrzeug. Die Energiemanagementeinrichtung ist dazu eingerichtet, ein Ladeprofil in dem Ladesteuergerät für die Aufladung einer Batterie des Elektrofahrzeugs an einer Ladestation oder im Elektrofahrzeug selbst einzustellen. Das Ladeprofil wird dabei unter Berücksichtigung eines geplanten Nutzungszeitpunktes des Elektrofahrzeugs und eines gewünschten Ladezustandes der Batterie sowie eines vorgegebenen Wertes für die maximale aufnehmbare Ladeleistung des Elektrofahrzeugs eingestellt. Die Energiemanagementeinrichtung ist mit einer Messeinheit gekoppelt ist, die eine an das Elektrofahrzeug seitens der Ladestation abgegebene tatsächliche Ladeleistung misst. Die Energiemanagementeinrichtung kann den Wert der tatsächlichen Ladeleistung für eine entsprechende Neueinstellung des Ladeprofils verwenden.

Die DE 10 2021 100 047 A1 betrifft ein Lastmanagementverfahren und eine Lastmanagementvorrichtung für an einem Netzanschlusspunkt angeschlossene Ladestationen für Elektrofahrzeuge. Es wird eine aktuelle Anzahl von Ladestationen, an denen Elektrofahrzeuge elektrisch geladen werden, ermittelt. In Abhängigkeit der Anzahl von Ladestationen, wird eine an dem Netzanschlusspunkt maximal abgebbare elektrischen Leistung bestimmt. Die elektrischen Ladeleistungen der Ladestationen, an denen die Elektrofahrzeuge geladen werden, wird anschließend in Abhängigkeit von der an dem Netzanschlusspunkt maximal abgebbaren elektrischen Leistung gesteuert.

In Applikationen bzw. Anwendungprogrammen, mit denen ein Ladevorgang zum elektrischen Aufladen einer Fahrzeugbatterie eines Elektrofahrzeuges an einer Elektroladestationen gestartet werden kann, wird herkömmlicherweiseweise die von der jeweiligen Elektroladestation bereitgestellte Ladeleistung P (in kW = Kilowatt) angegeben. Der dabei angegebene Wert der Ladeleistung P ist allerdings statisch und gibt die Datenblatt-Spezifikation der Ladestation wieder. Es gibt jedoch häufig Situationen, in denen der Fahrer bzw. Nutzer eines Elektrofahrzeuges feststellen muss, dass die tatsächlich erreichte Ladeleistung unterhalb des für die Ladeleistung der Ladestation angegebenen Wertes liegt. Das kann verschiedene Ursachen haben. Eine mögliche Ursache besteht beispielsweise darin, dass eine Steuerung des Elektrofahrzeugs bei dem Ladevorgang die Ladeleistung aus technischen Gründen fahrzeugseitig begrenzt. Es gibt jedoch auch zahlreiche Fälle, in denen die Ladestation LS zwar entsprechend einer Nennleistung $P_{NENN}$ spezifiziert ist, aber die Ladestation LS diesen spezifizieren Wert bei einem Ladevorgang tatsächlich nicht erreicht. Dies kann beispielsweise geschehen, wenn das Stromversorgungsnetz momentan oder zeitweise überlastet ist und daher der Ladestation LS weniger elektrische Leistung für einen Ladevorgang zur Verfügung stellt.

Offenbarung der Erfindung

Die vorliegende Erfindung schafft ein Verfahren zum Ermitteln einer tatsächlich erwartbaren Ladeleistung einer Ladestation nach Anspruch 1 und eine Vorrichtung zur Ermittlung einer tatsächlich erwartbaren Ladeleistung einer Ladestation nach Anspruch 10.

Bevorzugte Weiterbildungen sind Gegenstand der Unteransprüche.

Die Erfindung schafft demnach ein Verfahren zum Ermitteln einer tatsächlich erwartbaren Ladeleistung einer Ladestation mit den Schritten:

Erhalten eines Ladedatensatzes von der Ladestation, der eine von der Ladestation in einem Ladevorgang innerhalb einer Ladezeit an ein Elektrofahrzeug abgegegebene elektrische Ladeenergie angibt;

Berechnen einer durchschnittlichen Ladeleistung des Ladevorganges in Abhängigkeit von der in dem erhaltenen Ladedatensatz angegebenen Ladeenergie und der in dem erhaltenen Ladedatensatz angegebenen Ladezeit;

Vergleichen der berechneten durchschnittlichen Ladeleistung des Ladevorganges mit einer gespeicherten maximalen Ladeleistung der Ladestation;

Überschreiben der bisher gespeicherten maximalen Ladeleistung der Ladestation durch die berechnete durchschnittliche Ladeleistung, falls die berechnete durchschnittliche Ladeleistung größer ist als die bisher gespeicherte maximale Ladeleistung, wobei bei jeder vorgenommenen Überschreibung ein Zählwert eines zugehörigen Überschreibungszählers inkriminiert wird; und

Ermitteln der zuletzt überschriebenen maximalen Ladeleistung als die tatsächlich erwartbare Ladeleistung der Ladestation sobald der inkriminierten Zählwert des Überschreibungszählers einen vordefinierten Schwellenwert überschreitet.

Die Erfindung schafft ein Verfahren zum Ermitteln und Anzeigen einer tatsächlich erwartbaren Ladeleistung einer Ladestation, um einen Nutzer schon bei der Auswahl der Ladestation ein möglichst realistisches Bild über die in einem Ladevorgang seines Elektrofahrzeuges für ihn erwartbare Ladeleistung der Ladestation zu geben.

Bei dem erfindungsgemäßen Verfahren werden Ladedatensätze ausgewertet, um die Genauigkeit der angezeigten erwarteten Ladeleistung für den Nutzer zu erhöhen. Nach jedem Ladevorgang erhält der Ladedienstanbieter (App-Anbieter) einen Ladedatensatz LDS, der auch als CDR (Charge Detail Record) bezeichnet wird. In dem übertragenen Ladedatensatz ist vorzugsweise die Ladestationsnummer der betreffenden Ladestation, die Ladezeit des vorgenommenen Ladevorganges sowie die dabei geladene Energie aufgeführt. Daraus lässt sich dann für diesen einen Ladevorgang die durchschnittliche Ladeleistung berechnen. Über eine hohe Anzahl von Ladevorgängen hinweg (die zu verschiedensten Zeiten mit verschiedensten Fahrzeugen durchgeführt werden), ergibt sich so nach und nach ein Wert für die jemals höchste gemessene durchschnittliche Ladeleistung der betreffenden Ladestation. Dieser Wert ("realer Wert") wird dem Nutzer in der Applikation angezeigt, weil er der Realität entspricht, und nicht einem Datenblatt oder einer sonstigen Spezifikation der Ladestation entnommen ist.

Bei einer möglichen Ausführungsform des erfindungsgemäßen Verfahrens wird die ermittelte tatsächlich erwartbare Ladeleistung der Ladestation durch eine Applikation auf einer Anzeige einer Nutzerschnittstelle angezeigt. Hierdurch wird der Nutzer bei seiner Entscheidung unterstützt werden, an welcher Ladestation er sein Elektrofahrzeug aufladen möchte.

Die Nutzerschnittstelle kann auf einem tragbaren Nutzer-Endgerät vorgesehen sein, beispielsweise einen Mobilfunkgerät des Nutzers bzw. des Fahrers des Elektrofahrzeuges. Die auf der Anzeige der Nutzer-Schnittstelle angezeigte erwartbare Ladeleistung der Ladestation stellt für den Nutzer einen wertvollen Hinweis (bzw. Indikation) dahingehend dar, ob die zu erwartende Ladeleistung der Ladestation für den von ihm gewünschen Ladevorgang an seinem Elektrofahrzeug ausreichend ist und/oder wie lange der Ladevorgang an seinem Elektrofahrzeug vermutlich dauern wird.

Bei einer möglichen Ausführungsform des erfindungsgemäßen Verfahrens wird die ermittelte tatsächlich erwartbare Ladeleistung der Ladestation durch die Applikation zusammen mit einer Nennleistung der Ladestation auf einer Anzeige einer Nutzerschnittstelle angezeigt. Hierdurch können Auffälligkeiten und Abweichungen einfacher erkannt werden.

Die Nennleistung der Ladestation kann einer Datenbank entnommen werden. Es kann auch eine Abweichung zwischen der Nennleistung und der erwartbaren Ladeleistung berechnet und angezeigt werden. Eine starke Abweichung stellt einen Hinweis für einen Fehler oder eine bewusste betreiberseitige Begrenzung der Ladestation oder deren Stromversorgung dar und kann einen Fehleralarm zur Durchführung einer Reperatur oder Wartungsmaßnahme auslösen. Hierdurch wird die Betriebssicherheit und Betriebsbereitschaft der Ladestation erhöht.

Bei einer möglichen Ausführungsform des erfindungsgemäßen Verfahrens wird für jeden an einer Ladestation vorgenommenen Ladevorgang ein entsprechender Ladedatensatz von der Ladestation an eine Recheneinheit eines Ladedienstanbieters übertragen, welche auf Grundlage der von der Ladestation erhaltenen Ladedatensätze die tatsächlich erwartbare Ladeleistung der Ladestation ermittelt.

Bei einer möglichen Ausführungsform des erfindungsgemäßen Verfahrens enthält jeder übertragene Ladedatensatz neben der Ladeenergie des Ladevorganges und der Ladezeit des Ladevorganges eine Ladestationsnummer der Ladestation. Hierdurch kann die Recheneinheit des Ladediensanbieters parallel für eine Vielzahl von Ladestationen deren jeweils erwartbare Ladeleistung ermitteln und überwachen.

Bei einer möglichen Ausführungsform des erfindungsgemäßen Verfahrens wird für die ermittelte tatsächlich erwartbare Ladeleistung der Ladestation zusätzlich ein Datum angegeben, welches angibt, wann die tatsächlich erwartbare Ladeleistung der Ladestation ermittelt worden ist. Hierdurch erhält der Nutzer zusätzliche Gewissheit, ob die ermittelte tatsächlich erwartbare Ladeleistung der Ladestation noch als aktuell für den gewünschten Ladevorgang angesehen werden kann.

Bei einer möglichen Ausführungsform des erfindungsgemäßen Verfahrens wird die ermittelte tatsächlich erwartbare Ladeleistung der Ladestation fahrzeugmodellspezifisch ermittelt und durch eine Applikation auf einer Anzeige einer Nutzerschnittstelle in Abhängigkeit von einem Fahrzeugtyp des Elektrofahrzeugs angezeigt. Hierdurch kann der Nutzer erkennen, wie hoch bei seinem Fahrzeugmodell bzw. seinem Fahrzeugtyp die maximal jemals gemessene bzw. bestimmte Ladeleistung ist.

Bei einer möglichen Ausführungsform des erfindungsgemäßen Verfahrens wird die ermittelte tatsächlich erwartbare Ladeleistung der Ladestation in Abhängigkeit von Ladeumständen des Ladevorganges ermittelt und durch eine Applikation auf einer Anzeige einer Nutzerschnittstelle angezeigt. Diese Ladeumstände betreffen beispielsweise die Tageszeit oder einen sonstigen Kontext des Ladevorganges. Eine Ladestation kann beispielsweise tagsüber die Ladeleistung limitieren, um das Stromversorgungsnetz vor Überlastung zu schützen, wohingegen die Ladestation nachts, wenn das Stromversorgungsnetz nicht überlastet ist, die volle Ladeleistung für einen Ladevorgang zur Verfügung stellt.

Bei einer möglichen Ausführungsform des erfindungsgemäßen Verfahrens wird die durchschnittlichen Ladeleistung des Ladevorganges berechnet, indem die in dem erhaltenen Ladedatensatz angegebene Ladeenergie durch die in dem erhaltenen Ladedatensatz angegebenen Ladezeit dividiert wird. Diese Berechnung kann schnell ausgeführt werden.

Bei einer möglichen Ausführungsform des erfindungsgemäßen Verfahrens wird die berechnete durchschnittlichen Ladeleistung nicht durch neue Werte überschrieben. Statt dessen werden alle über die Zeit berechneten durchschnittlichen Ladeleistungen gespeichert und diese Gesamtheit oder Teilmenge zum Beispiel über Historgramme oder andere graphische Darstellungen dem Nutzer über eine Nutzerschnittstelle angezeigt.

Eine Ausführungsform eines Historgramms kann zum Beispiel die kummulierte Häufigkeit einer Ladeleistung sein. Aus einem solchen Historgramm kann der Nutzer zum Beispiel entnehmen, in wie viel Prozent der Fälle eine durchschnittliche Ladeleistung x kW tatsächlich erzielt wurde.

Eine andere Ausführungsform einer graphischen Darstellung kann zum Beispiel der Verlauf der durchschnittlichen Ladeleistung über der Zeit sein. Dabei kann diese Zeit forlaufend sein oder eine Periodizität aufweisen. So lässt sich zum Beispiel der typische wöchentliche oder auch nächtliche Leistungsverlauf dieser Ladestation darstellen.

Der Erfindung schafft gemäß einem weiteren Aspekt eine Vorrichtung zur Ermittlung einer tatsächlich erwartbaren Ladeleistung einer Ladestation mit: einer Daten-Schnittstelle zum Erhalten von Ladedatensätzen von mindestens einer Ladestation, wobei jeder Ladedatensatz eine von der jeweiligen Ladestation in einem Ladevorgang innerhalb einer Ladezeit an ein Elektrofahrzeug abgegegebene elektrische Ladeenergie angibt; und mit einer Recheneinheit, die einen Prozessor aufweist, der dazu ausgelegt ist, eine durchschnittliche Ladeleistung des Ladevorganges in Abhängigkeit von der in einem von der Ladestation erhaltenen Ladedatensatz angegebenen Ladeenergie und der in dem erhaltenen Ladedatensatz angegebenen Ladezeit zu berechnen, und die einen Komparator aufweist, welcher die durch den Prozessor berechnete durchschnittlichen Ladeleistung des Ladevorganges mit einer in einem Datenspeicher gespeicherten maximalen Ladeleistung der Ladestation vergleicht, wobei die bisher gespeicherte maximale Ladeleistung der Ladestation durch die berechnete durchschnittliche Ladeleistung in dem Datenspeicher überschrieben wird, falls die durch den Prozessor berechnete durchschnittliche Ladeleistung größer ist als die bisher gespeicherte maximale Ladeleistung, wobei bei jeder vorgenommenen Überschreibung ein Zählwert eines zugehörigen Überschreibungszählers der Recheneinheit inkriminiert wird und wobei die zuletzt überschriebene maximalen Ladeleistung als die tatsächlich erwartbare Ladeleistung der Ladestation ermittelt wird, sobald der inkriminierten Zählwert des Überschreibungszählers einen vordefinierten Schwellenwert erreicht.

Bei einer möglichen Ausführungsform der erfindungsgemäßen Vorrichtung ist eine Nutzerschnittstelle zur Ausgabe der tatsächlich erwartbaren Ladeleistung der Ladestation an einen Nutzer des Elektrofahrzeugs vorgesehen.

Die Erfindung schafft gemäß einem weiteren Aspekt ein Computerprogrammprodukt mit gespeicherten Progammbefehlen zur Durchführung des erfindungsgemäßen Verfahrens.

Im folgenden werden mögliche Ausführungsformen des erfindungsgemäßen Verfahrens und der erfindungsgemäßen Vorrichtung unter Bezugnahme auf die beigefügten Figuren näher beschrieben.

Es zeigen:

Fig. 1 ein Ablaufdiagramm zur Darstellung einer möglichen Ausführungsform eines erfindungsgemäßen Verfahrens zum Ermitteln einer tatsächlich erwartbaren Ladeleistung einer Ladestation;

Fig.2 ein schematisches Blockschaltbild zur Darstellung einer möglichen Ausführungsform einer erfindungsgemäßen Vorrichtung zur Ermittlung einer tatsächlich erwartbaren Ladeleistung einer Ladestation;

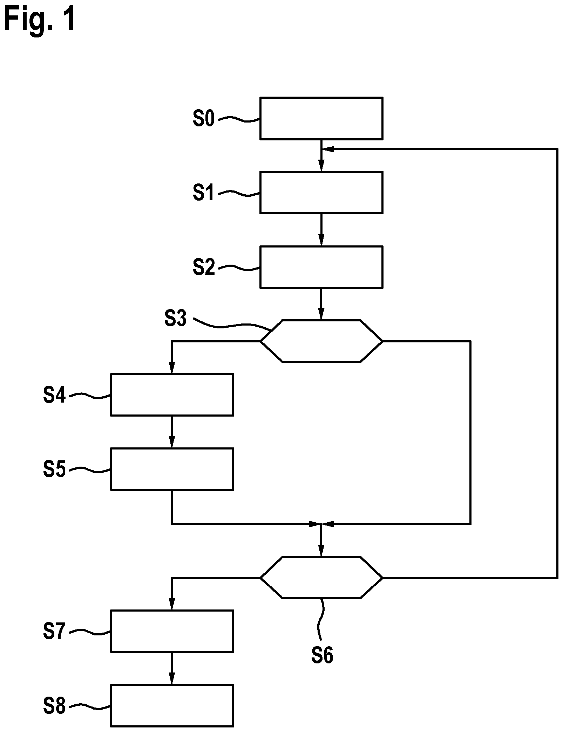

Wie in Fig.1 dargestellt umfasst ein erfindungsgemäßes Verfahren zum Ermitteln einer tatsächlich erwartbaren Ladeleistung einer Ladestation LS mehrere Hauptschritte S:

In einem optionalen Initialisierungschritt S0 des in Fig.1 dargestellten Verfahrens können Variablen initialisiert werden. Beispielsweise kann die maximalen Ladeleistung $P_{max\ LS}$ einer Ladestation LS zunächst auf den Anfangswert null gesetzt werden ( $P_{max\ LS}$ := 0). Ferner kann der Zählwert n eines Überschreibungszählers ÜZ auf den Anfangswert null eingestellt werden (n:=0). Darüber hinaus kann ein Kalender-Datumswert im Schritt S0 initialisiert werden.

In einem ersten Schritt S1 des Verfahrens erhält eine Recheneinheit RE bzw. eine Datenverarbeitungseinheit mindestens einen Ladedatensatz LDS von einer Ladestation LS. Der Ladedatensatz LDS gibt eine von der Ladestation LS in einem Ladevorgang LV innerhalb einer Ladezeit LZ an ein Elektrofahrzeug EF abgegebene elektrische Ladeenergie LE an. Nach jedem vorgenommenen Ladevorgang LV überträgt die Ladestation LS einen entsprechenden Ladedatensatz LDS über ein Datennetzwerk an die Recheneinheit RE. Der Ladedatensatz LDS kann beispielsweise von einem Ladepunktbetreiber (CPO) der Ladestation LS zu einem E-Mobilitätsanbieter (EMP) übertragen werden. Dem E-Mobilitätsanbieter (EMP) kann das Elektrofahrzeug EF (Marke, Modell) des konkreten Nutzers bekannt sein, da dies ein Teil der Nutzerdaten/ Fahrerdaten sein kann.

In einem weiteren Schritt S2 wird durch einen Prozessor der Recheneinheit RE eine durchschnittliche Ladeleistung $P_{LV}$ des Ladevorganges LV in Abhängigkeit von der in dem erhaltenen Ladedatensatz LDS angegebenen Ladeenergie LE und der in dem erhaltenen Ladedatensatz LDS angegebenen Ladezeit LZ berechnet. Bei einer bevorzugten Ausführungsform des erfindungsgemäßen Verfahrens wird die durchschnittlichen Ladeleistung $P_{LV}$ des Ladevorganges LV im Schritt S2 berechnet, indem die in dem erhaltenen Ladedatensatz LDZ angegebene Ladeenergie LE (in kWatt h) durch die in dem erhaltenen Ladedatensatz LDZ angegebenen Ladezeit LZ dividiert wird:

$$P_{LV} = LE / LZ$$

In einem weiteren Schritt S3 des in Fig.1 dargestellten Verfahrens wird durch einen Komperator KOMP die im Schritt S2 berechnete durchschnittlichen Ladeleistung $P_{LV}$ des Ladevorganges LV mit einer gespeicherten maximalen Ladeleistung $P_{max\ LS}$ der Ladestation LS verglichen.

In einem weiteren Schritt S4 wird die bisher gespeicherte maximale Ladeleistung $P_{LS\ MAX}$ der Ladestation LS durch die im Schritt S2 berechnete durchschnittliche Ladeleistung $P_{LV}$ des Ladevorganges LV überschrieben ($P_{LS\ MAX} := P_{LV}$), falls der im Schritt S3 durch den Komperator KOMP vorgenommene Vergleich ergibt, dass die berechnete durchschnittliche Ladeleistung $P_{LV}$ größer ist als die bisher für die betreffende Ladestation LS gespeicherte maximale Ladeleistung $P_{LS\ MAX}$ ($P_{LV} > P_{LS\ MAX}$).

Bei jeder im Schritt S4 vorgenommenen Überschreibung wird zudem ein Zählwert n eines zugehörigen Überschreibungszählers ÜZ im Schritt S5 inkriminiert bzw. um eins erhöht ($n := n + 1$).

Der im Schritt S5 inkriminierte Zählwerts n+1 des Überschreibungszählers ÜZ wird in eimem folgenden Schritt S6 mit einem vordefinierten Zähler-Schwellenwert n-SW verglichen.

In einem weiteren Schritt S7 des in Fig.1 dargestellten Verfahrens wird die zuletzt überschriebene maximale Ladeleistung $P_{LS\ MAX}$ (Datenblattwert)der Ladestation LS als die tatsächlich erwartbare Ladeleistung $P_{real}$ der Ladestation LS ermittelt, sobald der Vergleich im Schritt S6 ergibt, dass der im Schriit S5 inkriminierte Zählwert n+1 des Überschreibungszählers ÜZ den vordefinierten Zähler-Schwellenwert n-SW erreicht bzw. überschreitet (n+1 >= n-SW). In der Realität wird sich $P_{real}$ asymptotisch von unten einem Zielwert annähern. Der Wert n-SW kann für jede Ladestation LS individuell gewählt sein und auch dynamisch von der Differenz $P_{LS\ MAX}$ und $P_{real}$ abhängig gemacht werden. Wenn der reale Wert beispielsweise noch realtiv weit vom Datenblattwert entfernt ist, kann der Wert n-SW vergrößert werden, um eine gewisse statistische Sicherheit zu erlangen. Wenn jedoch die Differenz zwischen dem Datenblattwert und dem realen Wert bereits nach wenigen Zählerschritten n nahe beieinander liegen, braucht man nicht unbedingt abzuwarten, bis der ursprünglichen Wert n-SW erreicht wurde, sondern kann das Verfahren auch schon früher abschließen.

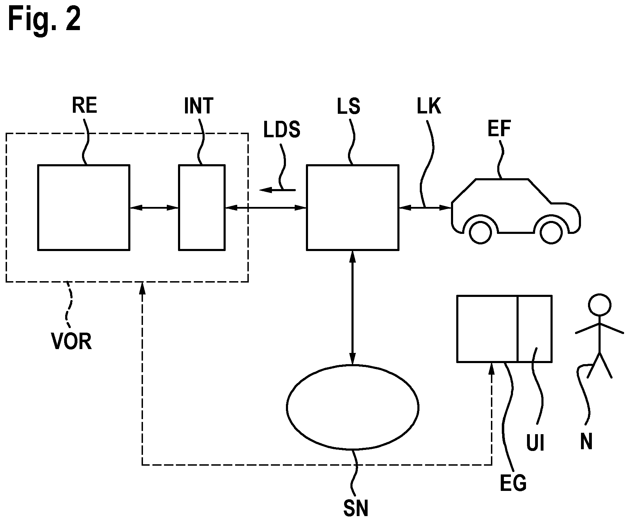

Bei einer möglichen Ausführungsform des erfindungsgemäßen Verfahrens wird in einem Schritt S8 des Verfahrens die ermittelte tatsächlich erwartbare Ladeleistung $P_{real}$ der Ladestation LS durch eine Applikation APP auf einer Anzeige einer Nutzerschnittstelle UI eines Nutzer-Endgerätes EG einem Nutzer N des Elektrofahrzeuges EF angezeigt, wie in Fig.2 schematisch dargestellt ist.

Das Nutzer-Endgerät EG kann ein tragbares Mobilfunkgerät des Nutzers aufweisen. Das Nutzer-Endgerät EG kann auch einen Teil einer Konsole des Elektrofahrzeuges EF bilden und darin fest verbaut sein.

Die ermittelte tatsächlich erwartbare Ladeleistung $P_{real}$ der Ladestation LS kann auch über eine drahtlose oder drahtgebundene Kommunikationsschnittstelle an eine Steuerung des Elektrofahrzeuges EF übermittelt werden.

Die ermittelte tatsächlich erwartbare Ladeleistung $P_{real}$ der Ladestation LS kann durch eine Applikation APP dem Nutzer angezeigt werden bevor dessen Elektrofahrzeug EF die Ladestation LS erreicht. Dem Nutzer N kann über die Applikation APP zudem eine Entfernung zwischen der momentanen Position des Elektrofahrzeugs EF und der Ladestation LS angezeigt werden (z. B. 8,2 km). Ferner kann eine Adresse des Ladestation LS angezeigt werden und der Nutzer N mit Hilfe einer Navigationseinrichtung zu der Ladestation LS geleitet werden. Bei einer möglichen Implementierung werden dem Nutzer N verschiedene Ladestationen LS angezeigt, die sich in der Umgebung der momentanen Position des Elektrofahrzeuges EF befinden. Hierbei wird vorzugsweise deren tatsächlich erwartbare Ladeleistung $P_{real}$ mitangezeigt, so dass der Fahrer bzw. Nutzer entscheiden kann zu welcher Ladestation LS er fährt, um sein Elektrofahrzeug EF aufzuladen. Weitere mögliche Informationen, welche die Applikation APP anzeigen kann, umfassen einen Tarif für die Aufladung (Euro pro kWh), Öffnungszeiten der Ladestation LS, Authentifizierungsmöglichkeiten und/oder Bezahlmöglichkeiten an der jeweiligen Ladestation LS. Nach Erreichen der ausgewählten Ladestation LS kann der Nutzer N nach Herstellung einer Ladeverbindung über ein Ladekabel LK den Ladevorgang LV mittels der Applikation APP durch Betätigen eine auf der Anzeige der Nutzerschnittstelle UI angezeigten Ladestart-Buttons starten.

Bei einer möglichen Ausführungsform des erfindungsgemäßen Verfahrens wird die ermittelte tatsächlich erwartbare Ladeleistung $P_{real}$ der Ladestation LS durch die Applikation APP zusammen mit einer Nennleistung $P_{NENN}$ der Ladestation LS auf der Anzeige der Nutzerschnittstelle UI des Nutzer-Endgerätes angezeigt. Die Nennleistung einer Ladestation LS für Elektrofahrzeuge EF wird in Kilowatt (kW) angegeben und gibt die elektrische Leistung an, die die Ladestation LS nominal bereitstellen kann.

Bei einer möglichen Ausführungsform des erfindungsgemäßen Verfahrens wird die erwartbare Ladeleistung über Histogramme oder andere graphische Darstellungen auf der Anzeige der Nutzerschnittstelle UI des Nutzer-Endgerätes angezeigt.

Bei einer möglichen Ausführungsform des erfindungsgemäßen Verfahrens wird für jeden an einer Ladestation LS vorgenommenen Ladevorgang LV ein entsprechender Ladedatensatz LDS von der Ladestation LS an eine Recheneinheit RE eines Ladedienstanbieters übertragen, welche auf Grundlage der von der Ladestation LS nacheinander erhaltenen Ladedatensätze LDS die tatsächlich erwartbare Ladeleistung $P_{real}$ der Ladestation LS ermittelt. Die von einer anhand ihrer Ladestationsnummer LS-NR identifizierten Ladestation LS erhaltenen Ladedaten (Ladeenergie LE und Ladezeit LZ) können bei einer möglichen Implementierung über einen gewissen Zeitraum hinweg gespeichert und anschliessend durch einen Prozessor der Recheneinheit RE ausgewertet werden. Jeder von einer Ladestation LS übertragene Ladedatensatz LDS enthält vorzugsweise neben der Ladeenergie LE des dort vorgenommenen Ladevorganges LV und der Ladezeit LZ des vorgenommenen Ladevorganges LV eine Ladestationsnummer LS-NR oder einen sonstigen Identifizierer LS-ID der Ladestation LS.

Bei einer möglichen Implementierung wird die Ladezeit LZ eines Ladevorganges LV gemessen. Alternativ kann die Ladezeit LZ auch anhand des Zeitraumes ermittelt werden über den hinweg das Elektrofahrzeug EF mit der Ladestation LS über ein Ladekabel LK verbunden ist. Ein Ladevorgang LV wird automatisch beeendet sobald die Fahrzeugbatterie des angeschlossenen Elektrofahrzeugs EF vollständig aufgeladen ist. Falls nach dem vollständigen Aufladen der Fahrzeugbatterie des Elektrofahrzeugs EF die Kabelverbindung über das Ladekabel LK durch den Nutzer nicht sofort gelöst wird, erhöht sich die anhand der bestehenden Ladekabelverbindung ermittelte Ladezeit LZ des Ladevorganges LV solange bis der Nutzer die Kabelverbindung löst. In diesem Fall ergibt die Division der Ladeenergie LE des Ladevorganges LV durch die Ladezeit LZ (LE/LZ) aufgrund der ermittelten relativ langen Ladezeit LZ einen geringen Wert für die Ladeleistung $P_{LV}$ des betreffenden Ladevorganges LV. Bei einer Vielzahl von beobachteten Ladevorgängen LV (d.h einer hohen Anzahl von Überschreibungen im Schritt S4) kommt es allerdings auch öfter vor, dass Ladevorgänge LV seitens des Nutzers N manuell unterbrochen werden bevor die Fahrzeugbatterie des Elektrofahrzeuges EF vollständig aufgeladen ist, so dass aufgrund der hierbei gegebenen relativ kurzen Ladezeit LZ sich ein höherer Wert für die Ladeleistung $P_{LV}$ des betreffenden Ladevorganges LV ergibt.

Dies ist auch technisch bedingt,da Elektrofahrzeuge EF üblicherweise bei leerer Batterie eine höhere Ladeleistung aufweisen als bei einer fast vollen Batterie. Hier kommt ein Effekt der fahrzeugseitigen Limitierung zum tragen.

Aus diesem Grund kann bei einer möglichen Ausführungsform des erfindungsgemäßen Verfahrens die Berechnung und Verwendung des Berechnugnsergebnisses abhängig gemacht werden von der tatsächlichen Ladezeit LZ. So können zum Beispiel besonders lange Ladevorgänge von der Berücksichtigung ausgeschlossen werden.

Mit zunehmender Zahl von ausgewerteten Ladevorgängen LV an einer Ladestation LS wird jedoch die tatsächlich erwartbare Ladeleistung $P_{real}$ der Ladestation LS statistisch immer genauer ermittelt.

Bei einer möglichen Ausführungsform des erfindungsgemäßen Verfahrens wird für die ermittelte tatsächlich erwartbare Ladeleistung $P_{real}$ der Ladestation LS zusätzlich ein Datum (Tag, Uhrzeit) angegeben, welches angibt, wann die tatsächlich erwartbare Ladeleistung $P_{real}$ der Ladestation LS seitens der Recheneinheit RE ermittelt worden ist. Hierdurch wird der Nutzer darüber informiert, wie aktuell die ermittelte erwartbare Ladeleistung $P_{real}$ der Ladestation LS für den von ihm geplannten Ladevorgang LV seines Elektrofahrzeuges EF an dieser Ladestation LS ist.

Bei einer möglichen Ausführungsform des erfindungsgemäßen Verfahrens wird die ermittelte tatsächlich erwartbare Ladeleistung der Ladestation LS durch eine Applikation APP auf einer Anzeige einer Nutzerschnittstelle UI in Abhängigkeit von einem Fahrzeugtyp des Elektrofahrzeugs EF angezeigt.

Bei einer weiteren möglichen Ausführungsform des erfindungsgemäßen Verfahrens wird die tatsächlich erwartbare Ladeleistung $P_{real}$ der Ladestation LS in Abhängigkeit von Ladeumständen des Ladevorganges LV ermittelt und durch eine Applikation APP auf einer Anzeige einer Nutzerschnittstelle UI angezeigt.

Wie schematisch in Fig. 2 dargestellt schafft die Erfindung gemäß einem weiteren Aspekt eine Vorrichtung VOR zur Ermittlung einer tatsächlich erwartbaren Ladeleistung einer Ladestation LS. Die Vorrichtung VOR umfasst im Wesentlichen eine Daten-Schnittstelle INT und eine Recheneinheit RE,
Über die Daten-Schnittstelle INT erhält die Vorrichtung VOR Ladedatensätze LDS von mindestens einer Ladestation LS, die durch ein Stromversorgungsnetz SN mit elektrischer Energie versorgt wird. Jeder übertragene Ladedatensatz LDS gibt eine von der jeweiligen Ladestation LS in einem Ladevorgang LV innerhalb einer Ladezeit LZ an ein angeschlossenes Elektrofahrzeug EF abgegegebene elektrische Ladeenergie LE an. Jeder von einer Ladestation LS übertragene Ladedatensatz LDS enthält vorzugsweise neben der Ladeenergie LE des Ladevorganges LV und der Ladezeit LZ des Ladevorganges LV eine Ladestationsnummer LS-NR oder einen sonstigen eindeutigen Identifizierer LS-ID der Ladestation LS.

Eine Recheneinheit RE der Vorrichtung VOR weist mindestens einen Prozessor oder sonstige Berechnungseinheit auf, der dazu ausgelegt ist, eine durchschnittliche Ladeleistung $P_{LV}$ des aktuelle vorgenommenen Ladevorganges LV in Abhängigkeit von der in einem von der Ladestation LS erhaltenen Ladedatensatz LDS angegebenen Ladeenergie LE und der in dem erhaltenen Ladedatensatz LDS angegebenen Ladezeit LZ zu berechnen. Hierzu wird die in dem erhaltenen Ladedatensatz LDZ angegebene Ladeenergie LE (in kWh) durch die in dem erhaltenen Ladedatensatz LDZ angegebenen Ladezeit LZ dividiert:

$$P_{LV} = LE / LZ$$

Die Rechenenheit RE weist zudem einen Komparator KOMP aufweist, welcher die durch den Prozessor berechnete durchschnittlichen Ladeleistung $P_{LV}$ des Ladevorganges LV mit einer in einem Datenspeicher DS der Recheneinheit RE gespeicherten maximalen Ladeleistung $P_{LS\,MAX}$ der betreffenden Ladestation LS vergleicht.

Die bisher gespeicherte maximale Ladeleistung $P_{LS\,MAX}$ der Ladestation LS wird durch die berechnete durchschnittliche Ladeleistung $P_{LV}$ in dem Datenspeicher DS überschrieben ($P_{LS\,MAX} := P_{LV}$), falls der durch den Komperator KOMP vorgenommene Vergleich ergibt, dass die durch den Prozessor berechnete durchschnittliche Ladeleistung $P_{LV}$ größer ist als die bisher für die betreffende Ladestation LS gespeicherte maximale Ladeleistung $P_{LS\,MAX}$.

Bei jeder vorgenommenen Überschreibung wird ein Zählwert n eines zugehörigen Überschreibungszählers ÜZ der Recheneinheit RE inkriminiert, d.h um eins erhöht. Die zuletzt überschriebene maximale Ladeleistung $P_{LS\,MAX}$ wird als die tatsächlich erwartbare Ladeleistung $P_{real}$ der Ladestation LS ermittelt, sobald der inkriminierte Zählwert (n+1) des Überschreibungszählers ÜZ einen vordefinierten Zähler-Schwellenwert n-SW erreicht.

Der Zähler-Schwellenwert n-SW kann bei einer möglichen Ausführungsform für verschieden Anwendungsfälle konfiguriert und angepasst werden. Dies hängt auch von der gewünschten erzielbaren Schätz-Genauigkeit der tatsächlich erwartbaren Ladeleistung $P_{real}$ der Ladestation LS ab.

Bei einer möglichen Ausführungsform der erfindungsgemäßen Vorrichtung VOR ist eine Nutzerschnittstelle UI eines Nutzer-Endgerätes EG zur Ausgabe der tatsächlich erwartbaren Ladeleistung $P_{real}$ der Ladestation LS an einen Nutzer N des Elektrofahrzeugs EF vorgesehen, wie in Fig. 2 dargestellt.

Die Ladestation LS und eine Steuerung des Elektrofahrzeug EF können miteinander kommunizieren, um den Ladevorgang LV zu steuern und zu überwachen. Informationen wie Ladeleistung, verbleibende Ladezeit und Batteriestatus der Fahrzeugbatterie können dabei ausgetauscht werden. Die ermittelte tatsächlich erwartbare Ladeleistung $P_{real}$ der Ladestation LS kann von der Recheneinheit RE auch an die Steuerung des Elektrofahrzeuges EF und/oder an eine Steuerung der Ladestation LS übertragen werden.

Weitere Ausführungsformen sind möglich. Bei einer möglichen Ausführungsform kann eine Schätz-Genauigkeit der ermittelten erwartbaren Ladeleistung $P_{real}$

der Ladestation LS berechnet und angezeigt werden. Je mehr Ladevorgänge LV an einer Ladestation LS vorgenommen und ausgewertet werden, desto höher ist die Schätz-Genauigkeit der ermittelten tatsächlich erwartbaren Ladeleistung $P_{real}$ der Ladestation LS. Die Ladedatensätze LDS werden vorzugsweise kryptografisch geschützt und entsprechend eine vorgegebenen Datenübertragungsprotokoll übertragen.

Obwohl die vorliegende Erfindung anhand der bevorzugten Ausführungsbeispiele vorstehend vollständig beschrieben wurde, ist sie darauf nicht beschränkt, sondern auf vielfältige Art und Weise modifizierbar.

**Patentansprüche**

1. Verfahren zum Ermitteln einer tatsächlich erwartbaren Ladeleistung ($P_{real}$) einer Ladestation (LS) mit den Schritten:

   Erhalten (S1) eines Ladedatensatzes (LDS) von der Ladestation (LS), der eine von der Ladestation (LS) in einem Ladevorgang (LV) innerhalb einer Ladezeit (LZ) an ein Elektrofahrzeug (EF) abgegebene elektrische Ladeenergie (LE) angibt;
   Berechnen (S2) einer durchschnittlichen Ladeleistung ($P_{LV}$) des Ladevorganges (LV) in Abhängigkeit von der in dem erhaltenen Ladedatensatz (LDS) angegebenen Ladeenergie (LE) und der in dem erhaltenen Ladedatensatz (LDS) angegebenen Ladezeit (LZ);
   Vergleichen (S3) der berechneten durchschnittlichen Ladeleistung ($P_{LV}$) des Ladevorganges (LV) mit einer gespeicherten maximalen Ladeleistung ($P_{LS\,MAX}$) der Ladestation (LS),
   Überschreiben (S4) der bisher gespeicherten maximalen Ladeleistung ($P_{LS\,MAX}$) der Ladestation (LS) durch die berechnete durchschnittliche Ladeleistung ($P_{LV}$), falls die berechnete durchschnittliche Ladeleistung ($P_{LV}$) größer ist als die bisher gespeicherte maximale Ladeleistung ($P_{LS\,MAX}$), wobei bei jeder vorgenommenen Überschreibung ein Zählwert eines zugehörigen Überschreibungszählers (ÜZ) inkriminiert (S5) wird;
   Ermitteln (S7) der zuletzt überschriebenen maximalen Ladeleistung ($P_{LS\,MAX}$) als die tatsächlich erwartbare Ladeleistung ($P_{real}$) der Ladestation (LS) sobald der inkriminierten Zählwerts des Überschreibungszählers (ÜZ) einen vordefinierten Schwellenwert (n-SW) überschreitet (S6).

2. Verfahren nach Anspruch 1, wobei die ermittelte tatsächlich erwartbare Ladeleistung ($P_{real}$) der Ladestation (LS) duch eine Applikation auf einer Anzeige einer Nutzerschnittstelle angezeigt wird.

3. Verfahren nach Anspruch 2, wobei die ermittelte tatsächlich erwartbare Ladeleistung ($P_{real}$) der Ladestation (LS) duch die Applikation zusammen mit einer Nennleistung ($P_{nenn}$) der Ladestation (LS) auf einer Anzeige einer Nutzerschnittstelle angezeigt wird.

4. Verfahren nach einem der vorangehenden Ansprüche 1 bis 3, wobei für jeden an einer Ladestation (LS) vorgenommenen Ladevorgang (LV) ein entsprechender Ladedatensatz (LDS) von der Ladestation (LS) an eine Recheneinheit eines Ladedienstanbieters übertragen wird, welche auf Grundlage der von der Ladestation (LS) erhaltenen Ladedatensätze (LDS) die tatsächlich erwartbare Ladeleistung ($P_{real}$) der Ladestation (LS) ermittelt.

5. Verfahren nach Anspruch 4, wobei jeder übertragene Ladedatensatz (LDS) neben der Ladeenergie (LE) des Ladevorganges (LV) und der Ladezeit (LZ) des Ladevorganges (LV) eine Ladestationsnummer (LSN) der Ladestation (LS) enthält.

6. Verfahren nach einem der vorangehenden Ansprüche 1 bis 5, wobei für die ermittelte tatsächlich erwartbare Ladeleistung ($P_{real}$) der Ladestation (LS) zusätzlich ein Datum angegeben wird, welches angibt, wann die tatsächlich erwartbare Ladeleistung ($P_{real}$) der Ladestation (LS) ermittelt worden ist.

7. Verfahren nach einem der vorangehenden Ansprüche 1 bis 6, wobei die die ermittelte tatsächlich erwartbare Ladeleistung ($P_{real}$) der Ladestation (LS) duch eine Applikation auf einer Anzeige einer Nutzerschnittstelle (UI) in Abhängigkeit von einem Fahrzeugtyp des Elektrofahrzeugs (EF) angezeigt wird.

8. Verfahren nach einem der vorangehenden Ansprüche 1 bis 7, wobei die die tatsächlich erwartbare Ladeleistung ($P_{real}$) der Ladestation (LS) in Abhängigkeit von Ladeumständen des Ladevorganges (LV) ermittelt und durch eine Applikation auf einer Anzeige einer Nutzerschnittstelle (UI) angezeigt wird.

9. Verfahren nach einem der vorangehenden Ansprüche 1 bis 8, wobei die durchschnittlichen Ladeleistung ($P_{LV}$) des Ladevorganges (LV) berechnet (S2) wird, indem die in dem erhaltenen Ladedatensatz (LDS) angegebene übertragene elektrische Ladeenergie (LE) des Ladevorganges (LV) durch die in dem erhaltenen Ladedatensatz (LDS) angegebenen Ladezeit (LZ) des Ladevorganges (LV) dividiert wird.

10. Vorrichtung zur Ermittlung einer tatsächlich erwartbaren Ladeleistung ($P_{real}$) einer Ladestation (LS) mit:

einer Daten-Schnittstelle (INT) zum Erhalten von Ladedatensätzen (LDS) von mindestens einer Ladestation (LS), wobei jeder Ladedatensatz (LDS) eine von der jeweiligen Ladestation (LS) in einem Ladevorgang (LV) innerhalb einer Ladezeit (LZ) an ein Elektrofahrzeug (EF) abgegebene elektrische Ladeenergie (LE) angibt; und mit

einer Recheneinheit (RE), die einen Prozessor aufweist, der dazu ausgelegt ist, eine durchschnittliche Ladeleistung ($P_{LV}$) des Ladevorganges (LV) in Abhängigkeit von der in einem von der Ladestation (LS) erhaltenen Ladedatensatz (LDS) angegebenen Ladeenergie (LE) und der in dem erhaltenen Ladedatensatz (LDS) angegebenen Ladezeit (LZ) zu berechnen, und die einen Komparator (KOMP) aufweist, welcher die durch den Prozessor berechnete durchschnittlichen Ladeleistung ($P_{LV}$) des Ladevorganges (LV) mit einer in einem Datenspeicher (DS) gespeicherten maximalen Ladeleistung ($P_{LS\ MAX}$) der Ladestation (LS) vergleicht, wobei die bisher gespeicherte maximale Ladeleistung ($P_{LS\ MAX}$) der Ladestation (LS) durch die berechnete durchschnittliche Ladeleistung ($P_{LV}$) in dem Datenspeicher (DS) überschrieben wird, falls die durch den Prozessor berechnete durchschnittliche Ladeleistung ($P_{LV}$) größer ist als die bisher gespeicherte maximale Ladeleistung ($P_{LS\ MAX}$), wobei bei jeder vorgenommenen Überschreibung ein Zählwert eines zugehörigen Überschreibungszählers (ÜZ) der Recheneinheit (RE) inkriminiert wird und wobei die zuletzt überschriebene maximalen Ladeleistung ($P_{LS\ MAX}$) als die tatsächlich erwartbare Ladeleistung ($P_{real}$) der Ladestation (LS) ermittelt wird, sobald der inkriminierten Zählwerts des Überschreibungszählers (ÜZ) einen vordefinierten Schwellenwert (SW) erreicht.

11. Vorrichtung nach Anspruch 10, wobei eine Nutzerschnittstelle (UI) zur Ausgabe der tatsächlich erwartbaren Ladeleistung ($P_{real}$) der Ladestation (LS) an einen Nutzer des Elektrofahrzeugs (EF) vorgesehen ist.

12. Computerprogrammprodukt mit gespeicherten Programmbefehlen zur Durchführung des Verfahrens nach einem der vorangehenden Ansprüche 1 bis 9.

Fig. 1

# Fig. 2

Europäisches Patentamt

European Patent Office

Office européen des brevets

# EUROPÄISCHER RECHERCHENBERICHT

**Nummer der Anmeldung**

EP 25 15 1452

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 217213 A1 (SIEMENS AG [DE]) 9. März 2017 (2017-03-09) | 1,6, 8-10,12 | INV. B60L53/30 |
| Y | * Absätze [0008], [0011], [0014], [0018], [0019], [0023]; Abbildungen 1-3 * | 2-5,7,11 | B60L53/60 B60L53/63 B60L53/65 B60L53/66 |
|   | - - - - - | | |
| Y | DE 10 2010 027729 A1 (BAYERISCHE MOTOREN WERKE AG [DE]) 20. Oktober 2011 (2011-10-20) * Absätze [0005] - [0007], [0021], [0026], [0032], [0050], [0064]; Abbildungen 1-4 * | 2-5,7,11 | B60L3/12 |
|   | - - - - - | | |

**RECHERCHIERTE SACHGEBIETE (IPC)**

B60L

Der vorliegende Recherchenbericht wurde für alle Patentansprüche erstellt

| Recherchenort | Abschlußdatum der Recherche | Prüfer |
|---|---|---|
| Den Haag | 13. Juni 2025 | Schury, Dominik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 15 1452

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-06-2025

| Im Recherchenbericht angeführtes Patentdokument | Datum der Veröffentlichung | Mitglied(er) der Patentfamilie | Datum der Veröffentlichung |
|---|---|---|---|
| DE 102015217213 A1 | 09-03-2017 | CN 108136930 A<br>DE 102015217213 A1<br>EP 3331722 A1<br>US 2018251038 A1<br>WO 2017042032 A1 | 08-06-2018<br>09-03-2017<br>13-06-2018<br>06-09-2018<br>16-03-2017 |
| DE 102010027729 A1 | 20-10-2011 | DE 102010027729 A1<br>WO 2011128235 A1 | 20-10-2011<br>20-10-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016202002 A1
- DE 102021100047 A1